# EUROPÄISCHE PATENTANMELDUNG

(11) **EP 4 501 842 A1**
(43) Veröffentlichungstag der Anmeldung: **05.02.2025**
(21) Anmeldenummer: 23020365.5
(22) Anmeldetag: 02.08.2023
(51) Int. Cl.: C01B 3/38, C01B 3/50

(54) **VERFAHREN UND ANLAGE ZUR HERSTELLUNG VON WASSERSTOFF**

(71) Anmelder: Linde GmbH, 82049 Pullach (DE)
(72) Erfinder: Leitmayr, Werner, 82049 Pullach (DE); Haselsteiner, Thomas, 82049 Pullach (DE); Peschel, Andreas, 82049 Pullach (DE); Behrens, Axel, 82049 Pullach (DE); Klein, Harald, 80290 München (DE); Hemauer, Johanna, 80290 München (DE); Schmid, Maximilian, 80290 München (DE)
(74) Vertreter: Fischer, Werner

(57) **Zusammenfassung**

Es wird ein Verfahren sowie eine Anlage (100) zur Herstellung von Wasserstoff, bei dem ein kohlenwasserstoffhaltiger Einsatzstrom (1, 2) einer Dampfreformierung (120) unterworfen wird, wobei die Dampfreformierung (120) unter Verwendung einer Reaktionsanordnung (200) durchgeführt wird, die eine erste Reaktionszone (210) aufweist, welcher unter Verwendung von elektrischem Strom (P) erzeugte Wärme zugeführt wird. Kennzeichnend hierbei ist, dass ein in der ersten Reaktionszone (210) erhaltene Prozessgas ohne Zuführung von Wärme in einer zweiten Reaktionszone (220) behandelt wird.

## Beschreibung

Die Erfindung betrifft ein Verfahren und eine Anlage zur Herstellung von Wasserstoff.

### Hintergrund

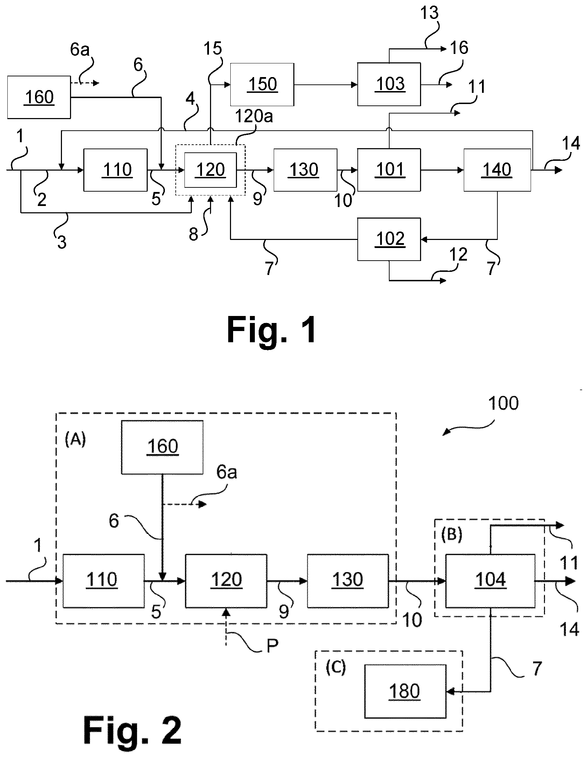

Der technische Hintergrund der vorliegenden Erfindung wird unter Bezugnahme auf Figur 1 erläutert, die ein konventionelles Dampfreformierungsverfahren (engl. Steam Methane Reforming, SMR) in Form eines Blockdiagramms veranschaulicht. Die Energie für die stark endotherm ablaufende Reformierungsreaktion wird hierbei durch die Verbrennung von fossilem Brennstoff, z.B. Erdgas, bereitgestellt.

In Figur 1 sind eine Einsatzvorbehandlung 110, eine Dampfreformierung 120, eine Wassergasshift 130, eine Wasserstoffaufreinigung 140, eine Wärmerückgewinnung 150 und ein Dampfsystem 160 veranschaulicht, wobei die entsprechend bezeichneten Elemente jeweils auch für eine oder mehrere Einheiten stehen können, die für die genannten Schritte eingerichtet sind.

Ferner ist an drei Stellen jeweils eine Kohlendioxidentfernung 101, 102 und 103 dargestellt, die jeweils optional, bzw. im Falle der Kohlendioxidentfernungen 101 und 102, auch alternativ zueinander vorhanden sein können.

Ein kohlenwasserstoffhaltiger Stoffstrom 1, beispielsweise Erdgas, wird im dargestellten Beispiel in einen Einsatzstrom 2 und einen Brenngasstrom 3 aufgeteilt, wobei der Einsatzstrom 2 mit einem zurückgeführten, stromab der Wasserstoffaufreinigung 140 erhaltenen Wasserstoffstrom 4 vereinigt wird.

Nach der typischerweise hydrierenden Einsatzvorbehandlung 110 wird ein entsprechend vorbehandelter Einsatzstrom 5 mit einem Dampfstrom 6 aus dem Dampfsystem 160 zusammengeführt, das auch beispielsweise Exportdampf 6a bereitstellen kann, und in die Dampfreformierung 120 geführt, die unter Verwendung eines oder mehrerer befeuerter Reaktoren 120a betrieben wird.

Der Brenngasstrom 3 und ein in der Wasserstoffaufreinigung 140 gewonnenes Abgas 7 (auch als Offgas oder Restgas bezeichnet, siehe unten) werden mit Verbrennungsluft 8 verbrannt. Die Energie für die stark endotherme Reaktion in der Dampfreformierung 120 wird also durch die Verbrennung von fossilem Brennstoff, z. B. Erdgas, in Form des Brenngasstroms 3 bereitgestellt.

Ein in der Dampfreformierung 120 erhaltener Produktstrom bzw. Prozessgasstrom, d.h. Synthesegas 9, der die Dampfreformierung bei typischerweise 900 bis 950 °C verlässt, wird in einem Prozessgaskühler abgekühlt, wobei Dampf entsteht, was in Figur 1 nicht gesondert veranschaulicht ist.

Bei der Erzeugung von Wasserstoff ist es üblich, das Synthesegas 9 in eine Wassergasshift 130, die einen oder mehrere Shiftreaktoren bzw. Shiftstufen umfassen kann, zu führen, um Kohlenmonoxid und Wasser in Wasserstoff und Kohlendioxid umzuwandeln und dadurch die Wasserstoffausbeute zu erhöhen.

Der Wassergasshift 130 wird geshiftetes Synthesegas 10 entnommen, in der Kohlendioxidentfernung 101, falls vorhanden, unter Abtrennung eines Kohlendioxidstroms 11 bearbeitet, und der Wasserstoffaufreinigung 140 zugeführt, die beispielsweise unter Verwendung einer Druckwechseladsorption (engl. Pressure Swing Adsorption, PSA) oder auf andere bekannte Weise durchgeführt werden kann.

In der Wasserstoffaufreinigung 140 wird das bereits erwähnte Abgas 7 erhalten, das, je nachdem ob die Kohlendioxidentfernung 101 durchgeführt wurde oder nicht, neben Methan, Kohlenmonoxid und Wasserstoff beträchtliche Mengen an Kohlendioxid enthalten kann. Abhängig hiervon kann die Kohlendioxidentfernung 102 durchgeführt werden, wobei ein Kohlendioxidstrom 12 abgetrennt wird. Auch wenn eine Kohlendioxidentfernung 102 durchgeführt wird, wird aus Gründen der Übersichtlichkeit das Abgas 7 auch stromab dieser mit 7 bezeichnet. Ferner wird in der Wasserstoffaufreinigung 140 ein Wasserstoffproduktstrom 14 gebildet, von dem der zuvor bereits erwähnte, rückgeführte Wasserstoffstrom 4 abgezweigt werden kann.

Ein Rauchgas 15 aus der Brennkammer eines in der Dampfreformierung 120 verwendeten Reaktors wird der Wärmerückgewinnung 150 unterworfen und sodann, falls vorhanden, unter Erhalt eines Kohlendioxidstroms 13 einerseits und eines kohlendioxidarmen oder zumindest an Kohlendioxid abgereicherten Rauchgases 16 der Kohlendioxidentfernung 103 unterworfen.

Um die direkten Kohlendioxidemissionen einer entsprechenden Anlage zu reduzieren, existieren im Wesentlichen die drei veranschaulichten Optionen zur Abscheidung von Kohlendioxid im Prozess, nämlich die Kohlendioxidentfernung 101 aus dem Prozessgas bzw. Synthesegas 10, die Kohlendioxidentfernung 102 aus dem Abgas 7, und die Kohlendioxidentfernung 103 aus dem Rauchgas 15.

Zu den Abscheidungsmethoden für Kohlendioxid zählen Absorption (z.B. durch Aminwäsche), Adsorption (z.B. durch die Hisorp^{®} CC-Technologie der Anmelderin), Membranverfahren oder entsprechende Kombinationen.

Im Falle einer Dampfreformierung kann eine akzeptable Abscheidungsrate von 90% oder mehr des gesamten, im Prozess gebildeten Kohlendioxids durch die Kohlendioxidentfernung 103 im Rauchgas 15 (engl. Post Combustion Capture, PCC) erreicht werden, da ein erheblicher Anteil der Emissionen bei der Verbrennung entsteht, wobei hier auch das Offgas nach der Aufreinigung 140 verbrannt und das entstehende Kohlendioxid im Rauchgas mit abgetrennt wird. Die Kohlenstoffabscheidung im Rauchgas 15 ist jedoch aufgrund des niedrigen Partialdrucks von Kohlendioxid sehr energieintensiv, verursacht zusätzliche Investitionskosten für den Prozess und kann zu unerwünschten Aminemissionen führen.

Um die direkten Kohlendioxidemissionen im Reformierungsprozess zu verringern, kann grundsätzlich eine elektrisch beheizte Reformierung (sogenannte E-SMR) eingesetzt werden. In dieser wird die Wärme nicht mehr durch die Verbrennung von Brenngas, sondern elektrisch bereitgestellt, so dass kein Rauchgas 15 als direktes Ergebnis der Beheizung entsteht und außerdem die Menge des Kohlenwasserstoffeinsatzes insgesamt, d.h. gemäß Figur 1 des kohlenwasserstoffhaltigen Stoffstroms 1, reduziert wird, da kein Brennstoff für die Dampfreformierung abgezweigt werden muss.

Nachfolgend werden zur Veranschaulichung des technischen Hintergrunds die Bezugszeichen gemäß Figur 1 auch im Zusammenhang mit einer elektrisch beheizten Reformierung verwendet, wobei spezifische Ausgestaltungen derselben Gegenstand der weiteren Figuren sind, die im Folgenden ausführlich erläutert werden. Ist nachfolgend daher von einer "Dampfreformierung 120" die Rede, sei hierunter eine elektrisch beheizte Reformierung verstanden.

Die elektrisch beheizte Reformierung hat auch den Vorteil, dass sie im Vergleich zur konventionellen Dampfreformierung bei einer höheren Temperatur von bis zu 1100 °C betrieben werden kann, was zu einem geringeren Methanschlupf in das Synthesegas 9 führt. Das Abgas 7 aus der Wasserstoffaufreinigung 140 kann in einer geeigneten Einrichtung verbrannt werden, um mit dem heißen Rauchgas z.B. die Eintrittsströme in die Dampfreformierung 120 vorzuwärmen. Zur Erreichung hoher Abscheidungsrate von Kohlendioxid müssen die Kohlendioxidemissionen aus dieser Verbrennung minimiert werden.

Bei der elektrisch beheizten Reformierung wird also kein Rauchgas 15 mehr durch die Verbrennung von Brenngas 3 für die Beheizung der Dampfreformierung 120 erzeugt, was der entscheidende Unterschied zur herkömmlichen Dampfreformierung ist. Der weit überwiegende Teil des im Prozess anfallenden Kohlendioxids ist im Prozessgas 10 enthalten, aus dem es bei höherem Partialdruck wesentlich wirtschaftlicher abgetrennt werden kann als aus dem Rauchgas 15.

Auch wenn der Methanschlupf in das Synthesegas 9 und weiter in das Abgas 7 durch Erhöhung der Reaktortemperatur verringert werden kann, so entsteht auch bei der elektrisch beheizten Reformierung ein kohlendioxidhaltiger Rauchgasstrom aus der Verbrennung des Abgases 7. Um diesen Rauchgasstrom minimieren oder effizient nutzen zu können, muss daher die Dampfreformierung neu konzipiert werden.

Es besteht vor diesem Hintergrund der Bedarf nach Prozesskonzepten für die elektrisch beheizte Reformierung, die insbesondere eine hohe Prozesseffizienz, hohe Kohlenstoffabscheidungsraten und eine geringere Produktionsrate an Kohlendioxid insgesamt aufweisen.

### Offenbarung der Erfindung

Vor diesem Hintergrund werden ein Verfahren und eine Anlage zur Herstellung von Wasserstoff mit den Merkmalen der unabhängigen Patentansprüche vorgeschlagen.

Ausgestaltungen sind Gegenstand der abhängigen Patentansprüche und der nachfolgenden Beschreibung.

Die hier vorgeschlagenen Konzepte umfassen eine elektrisch beheizte Reformierung zur Herstellung von Wasserstoff, mit einer Abtrennung von Kohlendioxid aus dem Synthesegas und/oder dem Abgas der Wasserstoffaufreinigung (z.B. durch Druckwechseladsorption) und der Entsorgung des abgetrennten Kohlendioxids durch Sequestrierung und/oder stoffliche Nutzung. Die Erfindung und ihre Ausgestaltungen stellen Konzepte mit hohem Wirkungsgrad, reduziertem Einsatzstoffverbrauch, minimalen direkten Emissionen von Kohlendioxid und vorteilhaften Abscheideraten (d.h. niedrigen Gesamtproduktionsraten von Kohlendioxid) bereit. Im Hinblick auf den Gesamtprozess werden bevorzugte Betriebsbedingungen wie Reaktortemperatur und Dampf-Kohlenstoff-Verhältnis angegeben, die für die vorgeschlagenen Konzepte vorteilhaft sind.

Es wird ein Verfahren zur Herstellung von Wasserstoff vorgeschlagen, bei dem ein kohlenwasserstoffhaltiger Einsatzstrom einer Dampfreformierung unterworfen wird, wobei die Dampfreformierung unter Verwendung einer Reaktionsanordnung durchgeführt wird, die eine erste Reaktionszone aufweist, welcher unter Verwendung von elektrischem Strom erzeugte Wärme zugeführt wird. Die vorliegende Erfindung und ihre Ausgestaltungen betreffen also eine elektrisch beheizte Reformierung. Hierbei ist vorgesehen, dass das in der ersten Reaktionszone erhaltene Prozessgas ohne Zuführung von Wärme in einer zweiten Reaktionszone behandelt wird. Die stromabwärts der ersten Reaktionszone angeordnete zweite Reaktionszone kann somit adiabat betrieben werden oder sie kann in einer Einrichtung angeordnet sein, mittels derer Wärme auf einen anderen Stoffstrom, insbesondere auf einen Einsatzstrom in die Dampfreformierung, übertragen wird. Die zweite Reaktionszone, die einen für die Dampfreformierung geeigneten Katalysator umfasst, kann in einem adiabaten Reaktor oder in für das Synthesegas vorgesehenen Passagen einer Wärmeübertragungseinrichtung bereitgestellt sein.

Die der ersten nachgeschaltete zweite Reaktionszone ermöglicht eine Verringerung des Abstandes zum Reaktionsgleichgewicht, wodurch sich eine Deaktivierung des Katalysatorbetts oder eine ungünstige Verteilung (Maldistribution) der Ströme im eigentlichen Reformer, d.h. der ersten Reaktionszone, kompensieren lässt und ein entsprechender elektrisch beheizter Reformer besonders kompakt ausgestalten werden kann.

Die Konzentrationen am Austritt aus der Dampfreformierung bzw. eines entsprechenden Reaktors sollten so nahe wie möglich am Reaktionsgleichgewicht sein, um die Effizienz der Reformierung zu erhöhen und die direkten Kohlendioxidemissionen zu verringern. Dies wird durch die zweite Reaktionszone erreicht, die den Methanschlupf in das Synthesegas durch einen zusätzlichen Methanumsatz reduziert. Der Katalysator der zweiten Reaktionszone kann in Form herkömmlicher Katalysatorpellets auf Nickelbasis vorliegen, die entweder einen geeigneten, insbesondere inerten Träger aufweisen oder aus Vollmaterial bestehen. Es können aber auch mit Katalysator beschichtete Komponenten oder ein der ersten Reaktionszone entsprechendes Design ohne elektrische Beheizung als zweite Reaktionszone zum Einsatz kommen. Vorteile werden auch durch die Verwendung einer Wärmeübertragungseinrichtung mit einem Katalysator, in der Wärme auf einen anderen Stoffstrom, insbesondere auf einen Einsatzstrom in die Dampfreformierung übertragen wird, erzielt.

In der zuletzt beschriebenen Ausgestaltung kann also Wärme von dem aus der ersten oder der zweiten Reaktionszone abströmenden Prozessgas oder direkt aus der zweiten Reaktionszone auf einen anderen Stoffstrom übertragen werden, bei dem es sich insbesondere um zumindest einen Teil des kohlenwasserstoffhaltigen Einsatzstroms in die Dampfreformierung handelt. Da eine derartige Wärmeübertragungseinrichtung einen Katalysator aufseiten des Prozessgases aufweist, wird nachfolgend auch von einem Wärmeübertrager-Reaktor gesprochen. Die zweite Reaktionszone kann also insbesondere als Teil eines Feed-Effluent-Wärmetauschers ausgebildet und mit einem geeigneten Katalysator ausgestattet sein. Anstelle eines adiabaten Reaktors stromabwärts der elektrisch ersten Reaktionszone kann also auch ein Feed-Effluent-Wärmetauscher verwendet werden, bei dem sich Katalysatormaterial nur auf der Seite des Prozessgases oder aber auf beiden Seiten der Wärmeübertragungsfläche befindet.

Die zur Dampfreformierung einsetzbare Reaktionseinrichtung kann auch stromaufwärts der ersten Reaktionszone eine dritte Reaktionszone aufweisen, wobei wenigstens zwei der Reaktionszonen mit dem gleichen Katalysator oder alle Reaktionszonen mit unterschiedlichen Katalysatoren ausgeführt sind. Die dritte Reaktionszone kann insbesondere auch für eine Vorreformierung eingerichtet sein. Sie kann in unterschiedlichen Ausführungen vorgesehen sein und beispielsweise elektrisch oder durch einen Gasstrom beheizt oder mit einem vorgewärmten Einsatz adiabat betrieben werden. Vorzugsweise ist die dritte Reaktionszone in einer Passage eines Feed-Effluent-Wärmetauscher angeordnet, der auch die zweite Reaktionszone umfasst. Der in der ersten Reaktionszone eingesetzte Katalysator kann beispielsweise Nickel enthalten und auf einem keramischen Träger oder der Reaktorwand angebracht sein, wohingegen in der zweiten und ggf. dritten Reaktionszone typischerweise eher ein Vollmaterial eingesetzt wird.

Die Dampfreformierung kann in Ausgestaltungen des vorgeschlagenen Verfahrens insbesondere bei 950 oder 1000 bis 1100 °C durchgeführt werden, wobei diese Temperaturen insbesondere an einem Austritt aus der ersten Reaktionszone vorliegen. Auf diese Weise kann insbesondere der Methanumsatz erhöht werden. Bei einem geringen Abstand zum Reaktionsgleichgewicht ist dabei insbesondere eine Reduzierung des Umwandlungsverlusts möglich, so dass sich Synergien ergeben.

In der Dampfreformierung kann in Ausgestaltungen der Erfindung ein Verhältnis von Dampf zu Kohlenstoff von mehr als 2,5 oder 4,0 und bis zu 4,5 (in mol/mol) eingestellt werden. Auf diese Weise können hohe Umsätze erzielt und ein Risiko der Koksbildung in der Dampfreformierung minimiert werden.

Die Dampfreformierung kann in bestimmten Ausgestaltungen der vorliegenden Erfindung bei einem Druck von über 25 bar, 50 bar oder 75 bar und bis zu 100 bar durchgeführt werden. In anderen Ausgestaltungen können aber auch geringere Druckwerte von Atmosphärendruck bis 25 bar, von 10 bis 20 bar oder von 10 bis 15 bar verwendet werden.

In weiteren Ausgestaltungen der Erfindung wird ein unter Verwendung der Dampfreformierung gebildetes Synthesegas einer Wassergasshift unterworfen, die eine Hochtemperaturshiftstufe und eine Niedertemperaturshiftstufe umfasst. Auch Isoshiftstufen können vorgesehen sein. Eine Isoshiftstufe zeichnet sich dadurch aus, dass sie nicht adiabat, sondern isotherm betrieben wird. Damit wird die Reaktionswärme abgeführt und im Vergleich zu einer adiabaten Shiftstufe mehr Kohlenmonoxid zu Kohlendioxid geshiftet (niedrigere Austrittstemperatur). Zum Kühlen wird beispielsweise Wasser verwendet und entsprechend Dampf erzeugt, der z.B. für den Prozess genutzt, exportiert oder für eine Beheizung, beispielsweise einer Aminwäsche oder dergleichen verwendet werden kann.

Ein unter Verwendung der Dampfreformierung gebildetes Synthesegas kann in anderen Ausgestaltungen der Erfindung einer Kohlendioxidentfernung und Wasserstoffabtrennung, insbesondere stromab der Wassergasshift, unterworfen werden, wobei unterschiedliche Ausgestaltungen und ihre Vorteile weiter unten erläutert sind. Dabei kann die Kohlendioxidentfernung stromauf der Wasserstoffentfernung angeordnet sein und ein in der Wasserstoffentfernung gebildeter Restgasstrom kann zumindest zum Teil in die Wasserstoffentfernung zurückgeführt werden. Die Wasserstoffentfernung kann eine erste Wasserstoffentfernungsstufe und eine zweite Wasserstoffentfernungsstufe umfassen. In anderen Ausgestaltungen kann die Kohlendioxidentfernung stromab der Wasserstoffentfernung angeordnet sein.

Die vorgeschlagene Anlage zur Herstellung von Wasserstoff ist dafür eingerichtet, einen kohlenwasserstoffhaltigen Einsatzstrom einer Dampfreformierung zu unterwerfen und die Dampfreformierung unter Verwendung einer Reaktionsanordnung durchzuführen, die eine erste Reaktionszone aufweist, welcher unter Verwendung von elektrischem Strom erzeugte Wärme zuführbar ist. Hierbei ist vorgesehen, dass die Reaktionsanordnung stromab der ersten Reaktionszone eine zweite Reaktionszone aufweist, die dafür eingerichtet ist, ein in der ersten Reaktionszone erhältliches Prozessgas ohne Zuführung von Wärme zu behandeln. Die zweite Reaktionszone kann in einem adiabaten Reaktor oder einer Passage eines Wärmeübertragers angeordnet sein.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 ein Verfahren gemäß einer nicht erfindungsgemäßen Ausgestaltung in Form eines schematischen Verfahrensdiagramms veranschaulicht, und die
Figuren 2 bis 11 Verfahren und Aspekte von Verfahren gemäß Ausgestaltungen der Erfindung in Form unterschiedlicher Darstellungen veranschaulichen.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und anderen Aspekte nicht als Beschränkungen des Umfangs der Erfindung, wie er in den Ansprüchen definiert ist, oder von Äquivalenten hierzu zu betrachten sind, und dass andere Ausführungsformen verwendet und Änderungen vorgenommen werden können, ohne vom Umfang der Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht speziell beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Figur 1 veranschaulicht ein Verfahren zur Dampfreformierung gemäß einer nicht erfindungsgemäßen Ausgestaltung in Form eines schematischen Verfahrensdiagramms, das bereits eingangs ausführlich erläutert wurde. Auf die obigen Erläuterungen wird Bezug genommen. Die entsprechenden Bezugszeichen werden teilweise auch in den nachfolgend erläuterten Figuren verwendet, insbesondere um die Einbindung der dort veranschaulichten Komponenten zu veranschaulichen.

In Figur 2 ist ein allgemeines Flussdiagramm einer elektrisch beheizten Reformierung zur Wasserstofferzeugung gemäß einer Ausgestaltung der Erfindung dargestellt und insgesamt mit 100 bezeichnet. Im Wesentlichen den Stoffströmen bzw. Verfahrensschritten und Apparaten gemäß Figur 1 entsprechende Stoffströme bzw. Verfahrensschritte und Apparate sind identisch wie dort bezeichnet, wobei ebenfalls auf die obigen Erläuterungen teilweise Bezug genommen wird. Eine Wasserstoffrückführung vergleichbar mit Strom 4 in Figur 1 kann auch hier vorgesehen sein und ist nur der Übersichtlichkeit halber weggelassen. Wie erwähnt, wird die elektrisch beheizte Dampfreformierung, wie die befeuerte Dampfreformierung gemäß Figur 1, nachfolgend ebenfalls mit 120 bezeichnet.

Die Gesamtanlage gemäß Figur 2, die die mit elektrischem Strom P betriebene Dampfreformierung 120 umfasst, ist in drei Blöcke unterteilt, die jeweils mit gestrichelten Linien umrandet sind: Hierbei handelt es sich um den Kernprozess mit dem Reaktionsteil bzw. der Dampfreformierung 120 gemäß Block A, eine hier kombinierte Wasserstoffaufreinigung und Kohlendioxidentfernung 104 gemäß Block B, und eine Abgasnutzung bzw. Abgasintegration 180 gemäß Block C. Die genannten Blöcke müssen nicht in entsprechenden baulichen Einheiten zusammengefasst sein.

Im Folgenden werden Prozessbedingungen gemäß Ausgestaltungen der Erfindung diskutiert, die die Gaszusammensetzungen am Reaktorausgang in Block A und den weiteren nachgeschalteten Blöcken B und C beeinflussen. Zudem werden Konzepte für die Realisierung der Blöcke A, B und C gemäß entsprechenden Ausgestaltungen der Erfindung diskutiert.

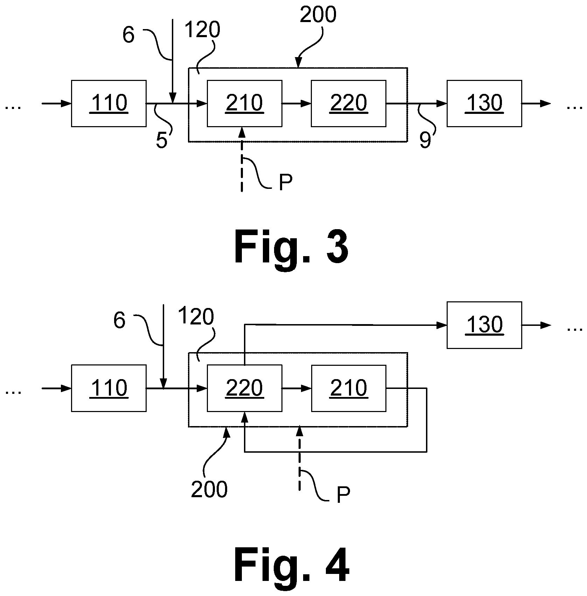

Zunächst sollen dabei zwei Ausgestaltungen der Erfindung in Bezug auf Block A bzw. die elektrisch beheizte Dampfreformierung 120 erläutert werden, die in den Figuren 3 und 4 veranschaulicht sind. Die Einbindung der Dampfreformierung 120 ist dabei durch die Aufbereitung 110 und die Wassergasshift 130 offensichtlich. Auslassungspunkte bezeichnen insbesondere die weiteren stromauf und stromab angeordneten Komponenten gemäß dem Verfahren 100, das in Figur 2 veranschaulicht ist.

Wie in Figur 3 dargestellt, kann die Dampfreformierung 120 unter Verwendung einer Reaktionsanordnung 200 durchgeführt werden, die eine erste Reaktionszone 210 und eine zweite Reaktionszone 220 aufweist, wobei die beiden Reaktionszonen 210 und 220 jeweils einen Katalysator aufweisen. Es kann sich um denselben Katalysator oder um unterschiedliche Katalysatoren, insbesondere nickelhaltige Katalysatoren handeln.

Während der ersten Reaktionszone 210 elektrische Energie P bzw. damit erzeugte Wärme zugeführt wird, wird die zweite Reaktionszone 220 adiabat betrieben, d.h. dieser wird keine Energie mehr zugeführt.

Wie in Figur 4 veranschaulicht, gemäß der die Dampfreformierung 120 ebenfalls unter Verwendung einer Reaktionsanordnung 200 durchgeführt wird, die eine erste Reaktionszone 210 und eine zweite Reaktionszone 220 aufweist, und gemäß der die beiden Reaktionszonen 210 und 220 jeweils einen Katalysator aufweisen, ist die zweite Reaktionszone 220 Teil eines Feed-Effluent-Wärmeübertrager-Reaktors. Es wird also Wärme auf den Reaktionseinsatz übertragen. Dabei kann der Feed-Effluent-Wärmeübertrager-Reaktor auch auf Seiten des Reaktionseinsatzes zumindest teilweise eine dritte Reaktionszone mit Katalysator enthalten. Nachfolgend werden weitere Aspekte der vorliegenden Erfindung und ihrer Ausgestaltungen weiter erläutert.

Optimierte Prozessbedingungen und Konzepte zur Steigerung der Methanumwandlung und zur Minimierung der Abgasrate umfassen einen Betrieb der elektrisch beheizten Reformierung bei hohen Temperaturen von bis zu 1100 °C, was, wie erwähnt, zu einer höheren Methanumwandlung (d.h. einem geringeren Methanschlupf) im Vergleich zu einer herkömmlichen Dampfreformierung führt.

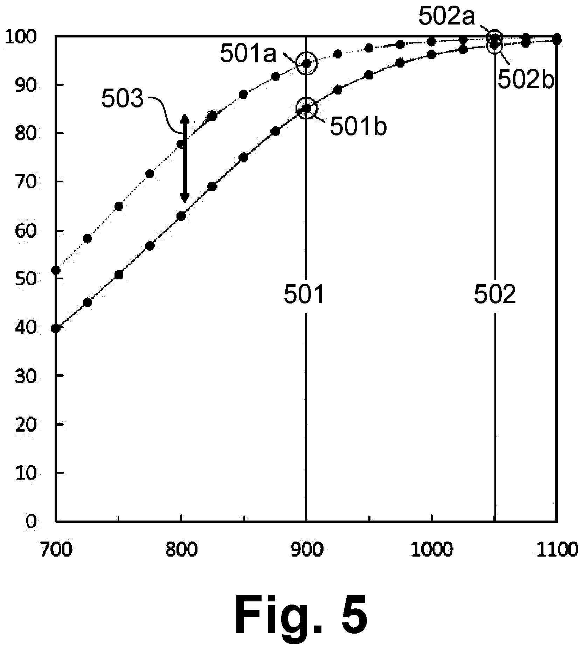

Dies ist in Figur 5 veranschaulicht, die ein Diagramm zeigt, in der eine Methankonversion X in Prozent auf der Vertikalachse gegenüber einer Reformiertemperatur T in Grad Celsius auf der Horizontalachse aufgetragen ist. Die oberen Datenpunkte geben Werte für ein Verhältnis von Dampf zu Kohlenstoff (S/C) von 2,8 bei einem Druck von 15 bar an, die unteren Datenpunkte Ergebnisse für ein Verhältnis von Dampf zu Kohlenstoff von 2,8 bei einem Druck von 30 bar. Vertikale Linien 501 und 502 bei 900 und 1050 °C dienen zur Veranschaulichung der Unterschiede. Die eingekreisten Punkte501a und 501b auf Linie 501 kennzeichnen die erreichten Methankonversionen bei niedriger, nicht bevorzugter Temperatur (900 °C) und verdeutlichen gleichzeitig einen großen Konversionsverlust bei Erhöhung des Betriebsdrucks (hier von 15 bar auf 30 bar) bei dieser Betriebstemperatur. Die eingekreisten Punkte 502a und 502b auf Linie 502 kennzeichnen die erreichten Methankonversionen bei hoher, bevorzugter Temperatur (1050 °C) und verdeutlichen gleichzeitig einen geringeren Konversionsverlust bei Erhöhung des Betriebsdrucks von 15 bar auf 30 bar. Mit Pfeil 503 ist ein Abstand zum Gleichgewicht (engl. Approach to Equilibrium, ATE) von 100 K bezogen auf 501b angegeben. Man erkennt, dass der Konversionsverlust bei einer Betriebstemperatur von 900 °C sehr hoch ist im Vergleich zu einem ATE von 100 K ausgehend von 502a und 502b.

Die Methanumwandlung wird also bei niedrigen Drücken, aber vor allem bei hohen Temperaturen aufgrund des abflachenden Verlaufs der Datenpunkte mit steigender Temperatur begünstigt. Hohe Betriebstemperaturen kompensiert somit den Umwandlungsverlust bei einem höheren Abstand zum Gleichgewicht.

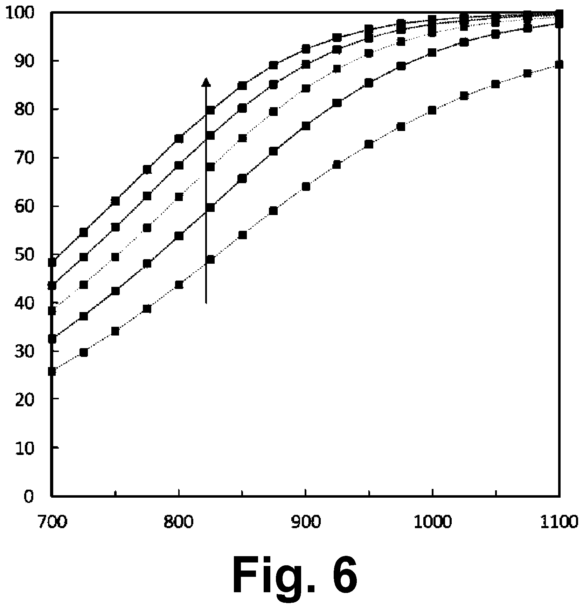

Die Methanumwandlung wird auch bei hohem Verhältnis von Dampf zu Kohlenstoff begünstigt. Dies ist in Figur 6 veranschaulicht, die ebenfalls ein Diagramm zeigt, in der eine Methankonversion X in Prozent auf der Vertikalachse gegenüber einer Reformiertemperatur T in Grad Celsius auf der Horizontalachse aufgetragen ist. Die Reihen von Datenpunkten geben in Pfeilrichtung von unten nach unten Werte für Werte des Verhältnisses von Dampf zu Kohlenstoff von 1, 1,5, 2, 2,5 und 3 bei einem Druck von jeweils 20 bar an.

Abhängig vom Reaktorkonzept kann es jedoch zu einem großen Abstand zum Gleichgewicht kommen. Daher sind die folgenden Betriebsbedingungen vorteilhaft, um hohe Umsetzungsraten zu erreichen, die zur Verringerung der Abgasproduktion begünstigt werden.

Vorteilhafterweise erfolgt ein Betrieb bei hoher Temperatur von über 1000 °C, um den Methanumsatz zu erhöhen. Wenn das ATE hoch ist, kann der Betrieb bei hohen Temperaturen den Umwandlungsverlust verringern. Ist das ATE jedoch niedrig (unter 10 K), können niedrigere Temperaturen ab 950 °C im Hinblick auf die Lebensdauer und die Materialwahl von Vorteil sein. Außerdem erhöhen noch höhere Reaktionstemperaturen (mehr als 1100 °C) den Umsatz nur geringfügig, gehen aber insbesondere mit höheren Dampfproduktionsraten im Prozessgas einher, was den Kaltgaswirkungsgrad verringert, wenn überschüssiger Dampf produziert wird.

Das Verhältnis von Dampf zu Kohlenstoff liegt vorteilhafterweise bei mehr als 2,5, um hohe Umsätze zu erreichen. Als besonders vorteilhaft haben sich sogar Werte von 4 oder etwas darüber erwiesen und werden daher in Ausgestaltungen der Erfindung vorgeschlagen. Außerdem verringert ein hohes Verhältnis von Dampf zu Kohlenstoff das Risiko der Koksbildung in der Dampfreformierung.

Der Reaktordruck wird vorteilhafterweise so hoch wie möglich eingestellt, um zusätzliche Ausrüstung (d.h. Investitionskosten, CAPEX) für die Produktverdichtung zu sparen. In Ausgestaltungen der vorliegenden Erfindung wird daher ein Reaktionsdruck von über 25 bar, 50 bar oder sogar 75 bar vorgeschlagen.

Der Abstand zum Gleichgewicht sollte so niedrig wie möglich sein, um die Effizienz zu erhöhen und die direkten Emissionen zu verringern. Um zu diesem Ergebnis zu kommen, kann die bereits erwähnte adiabate Reaktionszone, insbesondere ein adiabates Katalysatorbett ("zweite Reaktionzone"), stromabwärts des Reaktors bzw. von dessen Katalysatorbett ("erste Reaktionzone") installiert werden, das auch den erhöhten Kohlenstoffschlupf am Ende des Prozesses reduziert. Es kann sich in einigen oder allen Ausgestaltungen der Erfindung auch um ein weiteres Bett in einem gemeinsamen Reaktor handeln. Das adiabate Bett kann mit herkömmlichen Katalysatorpellets auf Nickelbasis gefüllt werden, und zwar auf einem Träger oder in Form von Vollmaterial. Es können aber auch mit Katalysator beschichtete Komponenten oder ein der ersten Reaktionszone entsprechendes Design ohne elektrische Beheizung als zweite Reaktionszone zum Einsatz kommen.

Anstelle eines adiabaten Reaktors stromabwärts der elektrisch beheizten Reformierung kann aber auch der erwähnte Feed-Effluent-Wärmeübertrager-Reaktor verwendet werden, bei dem der Katalysator auf der Abflussseite (im Gegensatz zu einem herkömmlichen gasbeheizten Reaktor mit vier Strömen) oder auf beiden Seiten des Reaktors gefüllt wird (in letzterem Fall wird vorliegend auch von einer "dritten Reaktionszone") gesprochen.

Die Wassergasshift kann eine Hochtemperaturshiftstufe, gefolgt von einer Niedertemperaturshiftstufe umfassen, um die Kohendioxid Abscheidungsrate im Prozess- oder Abgas zu erhöhen, den Abgasstrom zu minimieren und die Produktausbeute zu erhöhen. Eine reine Hochtemperaturshiftstufe würde zu einem hohen Abgasstrom führen, der nicht mehr für die Verbrennung benötigt wird, um die Reaktion mit Wärme zu versorgen, wie dies bei einer herkömmlichen Dampfreformierung der Fall ist. Auch eine Tieftemperaturshift könnte eingesetzt werden, um den Kohlenmonoxidschlupf weiter zu verringern.

Die gemäß Block B der Figur 2 eingesetzten Konzepte für die Abscheidung von Kohlenstoff und die Reinigung von Wasserstoff können eine Kohlenstoffabscheidung im Prozessgas mit anschließender Wasserstoffreinigung umfassen, wie grundsätzlich bereits in Figur 1 mit den Schritten 101 und 140 veranschaulicht, z.B. in einer entsprechenden Druckwechseladsorption. Im Folgenden werden verschiedene Konzepte für die Kohlendioxidentfernung und die Wasserstoffaufreinigung zur Erhöhung der Wasserstoffausbeute vorgeschlagen.

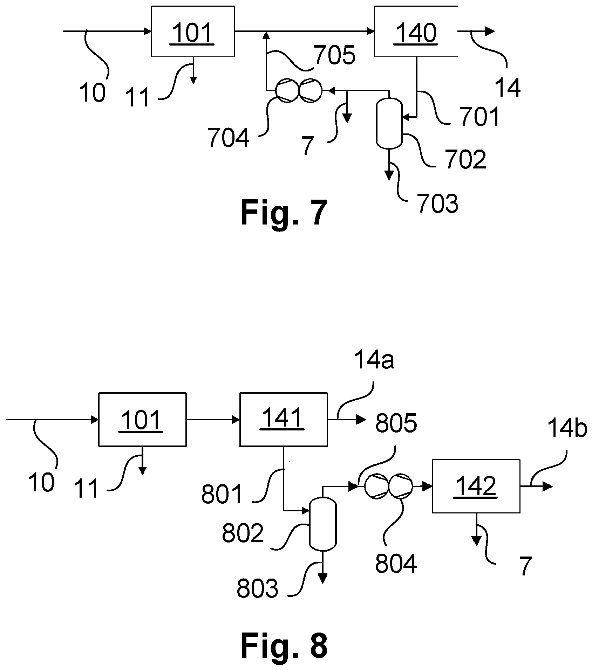

Die Wasserstoffausbeute kann beispielsweise durch eine teilweise Rückführung von Gas erhöht werden, wie in Figur 7 für einen Teil des Gasstroms 701 veranschaulicht. Dieses wird in einen Behälter 702 eingespeist, dem Kondensat 703 entnommen wird. Kopfgas 705 kann unter Verwendung einer Verdichteranordnung 704 rückgeführt werden, das Offgas 7 wird stromauf hiervon abgetrennt.

Alternativ dazu kann, wie in Figur 8 veranschaulicht, auch eine zweistufige Wasserstoffaufreinigung, beispielsweise mit zwei Druckwechseladsorptionsstufen 141, 142 verwendet werden, mittels derer zwei Wasserstoffprodukte 14a, 14b gebildet werden. Tailgas 801 der Druckwechseladsorptionsstufe 141 wird in einen Behälter 802 eingespeist, dem Kondensat 803 entnommen wird. Kopfgas 805 kann unter Verwendung einer Verdichteranordnung 804 in die Druckwechseladsorptionsstufe 142 eingespeist werden, in der das Offgas 7 abgetrennt wird. Mittels der Druckwechseladsorptionsstufen können die Wasserstoffprodukte 14a, 14b bei Bedarf mit unterschiedlichen Drücken und Reinheitsgraden erzeugt werden.

In Kombination mit den Reinigungskonzepten gemäß den Figuren 7 und 8 sind verschiedene Konzepte zur Kohlendioxidentfernung möglich, z.B. Aminwäsche oder Hisorp^{®} CC, wie oben eräutert.

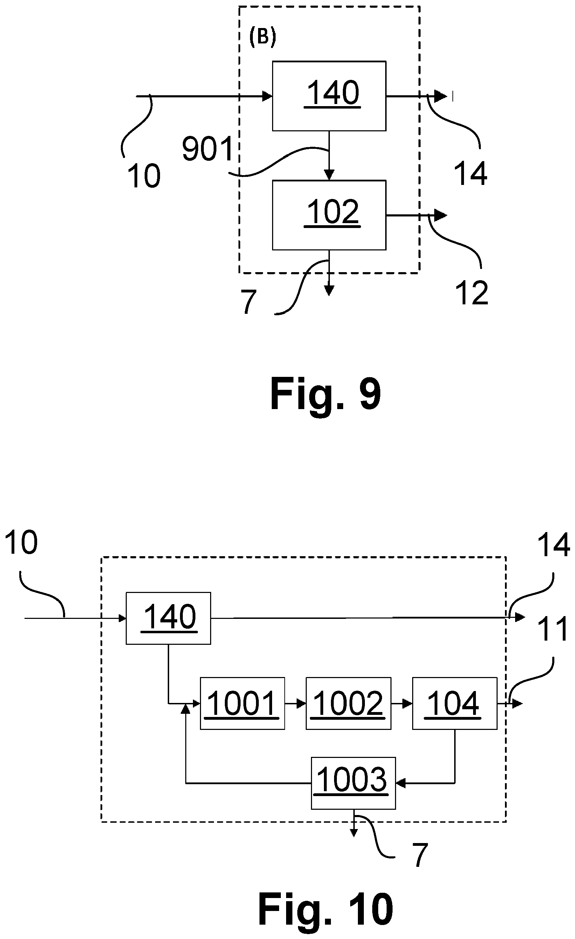

Alternativ ist auch eine Kohlendioxidentfernung im Tailgas der Wasserstoffaufreinigung möglich, wie in Figur 9 anhand des Tailgases 901 veranschaulicht. Die übrigen Komponenten und Stoffströme wurden bereits erläutert. Es sind verschiedene Konzepte zur Kohlendioxidentfernung 102 möglich, z. B. Aminwäsche (mit verschiedenen Lösungsmitteln, Rotationsschüttschicht usw.), Hisorp^{®} CC, die sogenannte Cryocap und die sogenannte Cryogenic Carbon Capture (CCC).

Details von weiteren Ausgestaltungen sind in Figur 10 dargestellt, in der das Tailgas der Wasserstoffaufreinigung einer Anordnung aus einer Verdichtung 1001, einer Trocknung 1002 und der Kohlendioxidentfernung zugeführt wird. Die Kohlendioxidentfernung ist hier mit 104 bezeichnet. Es kann sich hier insbesondere um eine Hisorp^{®} CC handeln. In der Kohlendioxidentfernung 104 an Kohlendioxid abgereichertes Gas wird in einer Kohlendioxid-Druckwechseladsorption 1003 bearbeitet, wobei das Offgas 7 gebildet und ein Rest nach stromauf der Verdichtung zurückgeführt werden kann.

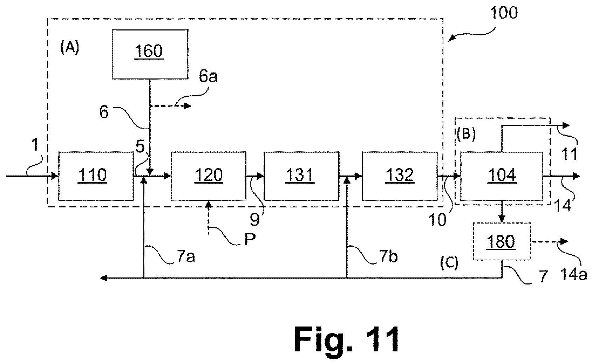

Aspekte der Offgasintegration und -nutzung gemäß Block C sind in Figur 11 dargestellt. Eine Wasserstoffrückführung vergleichbar mit Strom 4 in Figur 1 kann auch hier vorgesehen sein und ist nur der Übersichtlichkeit halber weggelassen. Da das verbleibende Offgas aus den oben vorgestellten Konzepten Methan und Kohlenmonoxid enthält, ist es vorteilhaft, dieses (teilweise) in Block A vor die Dampfreformierung und/oder vor eine Niedertemperaturshift zu recyceln. In Figur 11 sind dabei die Hochtemperaturshift mit 131 und die Niedertemperaturshift mit 132 bezeichnet. Auf diese Weise lassen sich die Wasserstoffausbeute und die Abtrennungsrate erhöhen und der Einsatzstoffverbrauch verringern. Dieses Verfahren ist in Kombination mit Hisorp^{®} CC im Abgas (siehe Figur 10) vorteilhaft, da das Abgas bereits unter Druck steht. Optional kann Wasserstoff mittels Membran- oder Druckwechseldadsorption aus dem Abgas abgetrennt werden, wie ebenfalls in Figur 11 mit Block 180 veranschaulicht. Dies ist auch in Kombination mit Hisorp^{®} CC im Abgas (siehe Figur 10) vorteilhaft, da das Abgas bereits unter Druck steht.

Der Offgasstrom kann in einer Festoxidbrennstoffzelle (SOFC) zur Stromerzeugung genutzt werden Das Offgas kann exportiert werden. Das Offgas oder das verbleibende Offgas kann einer befeuerten Einrichtung zur Abwärmenutzung zugeführt werden (z. B. zur Vorwärmung des Reaktionseinsatzes, Dampferzeugung). Zusätzlicher Dampf kann zum Antrieb des Reboilers der Desorberkolonne im Aminwaschprozess oder zur Stromerzeugung mit einer Dampfturbine verwendet oder exportiert werden. Insbesondere bei Konzepten mit Hisorp^{®} CC fällt eine große Menge an Überschussdampf an. Um den Dampfüberschuss zu reduzieren, kann die Prozessabwärme z.B. durch einen gasbeheizten Reformer eingebunden werden. Wenn bei einem einstufigen Aminwaschprozess nicht genügend Dampf im Prozess erzeugt wird, um den Reboiler der Desorberkolonne anzutreiben (z.B. in Fällen ohne befeuerten Erhitzer zur Abwärmenutzung), kann ein zweistufiger Aminprozess in Betracht gezogen werden, der einen geringeren Energieverbrauch, aber höhere Investitionskosten hat.

## Patentansprüche

1. Verfahren (100) zur Herstellung von Wasserstoff, bei dem ein kohlenwasserstoffhaltiger Einsatzstrom (1, 2) einer Dampfreformierung (120) unterworfen wird, wobei die Dampfreformierung (120) unter Verwendung einer Reaktionsanordnung (200) durchgeführt wird, die eine erste Reaktionszone (210) aufweist, welcher unter Verwendung von elektrischem Strom (P) erzeugte Wärme zugeführt wird, **dadurch gekennzeichnet, dass** ein in der ersten Reaktionszone (210) erhaltene Prozessgas ohne Zuführung von Wärme in einer zweiten Reaktionszone (220) behandelt wird.

2. Verfahren (100) nach Anspruch 1, bei der die zweite Reaktionszone (220) in einem adiabaten, stromabwärts der ersten Reaktionszone (210) angeordneten Reaktor angeordnet ist.

3. Verfahren (100) nach Anspruch 1, bei der die zweite Reaktionszone (220) Teil einer Wärmeübertragungseinrichtung ist, mittels der Wärme auf zumindest einen Teil des kohlenwasserstoffhaltigen Einsatzstroms (1, 2) übertragen wird.

4. Verfahren (100) nach Anspruch 3, bei dem die zweite Reaktionszone (220) als Teil eines Feed-Effluent-Wärmeübertrager-Reaktors ausgebildet ist, der aufseiten eines Prozessgasstroms aus der Dampfreformierung (120) mit einem Katalysator ausgestattet ist.

5. Verfahren (100) einem der Ansprüche 1 bis 4, bei dem die Reaktionsanordnung (200) stromauf der ersten Reaktionszone (210) eine dritte Reaktionszone aufweist.

6. Verfahren (100) nach einem der vorstehenden Ansprüche, bei dem die Dampfreformierung bei 950 oder 1000 bis 1100 °C durchgeführt wird.

7. Verfahren (100) nach einem der vorstehenden Ansprüche, bei dem die Dampfreformierung mit einem Verhältnis von Dampf zu Kohlenstoff von mehr als 2,5 oder 4,0 und bis zu 4,5 durchgeführt wird.

8. Verfahren (100) nach einem der vorstehenden Ansprüche, bei dem die Dampfreformierung bei einem Druck von über 25 bar, 50 bar oder 75 bar und bis zu 100 bar durchgeführt wird.

9. Verfahren (100) nach einem der vorstehenden Ansprüche, bei dem ein unter Verwendung der Dampfreformierung (120) gebildetes Synthesegas einer Wassergasshift (130) unterworfen wird, die eine Hochtemperaturshiftstufe (131) und eine Niedertemperaturshiftstufe (132) umfasst.

10. Verfahren (100) nach einem der vorstehenden Ansprüche, bei dem ein unter Verwendung der Dampfreformierung (120) gebildetes Synthesegas einer Kohlendioxidentfernung (101) und Wasserstoffabtrennung (140) unterworfen wird.

11. Verfahren (100) nach Anspruch 10, bei dem die Kohlendioxidentfernung (101) stromauf der Wasserstoffentfernung (140) angeordnet ist und ein in der Wasserstoffentfernung (140) gebildeter Restgasstrom (701) zumindest zum Teil in die Wasserstoffentfernung (140) zurückgeführt wird.

12. Verfahren (100) nach Anspruch 10, bei dem die Wasserstoffentfernung (140) eine erste Wasserstoffentfernungsstufe (141) und eine zweite Wasserstoffentfernungsstufe (142) umfasst.

13. Verfahren (100) nach Anspruch 10, bei dem die Kohlendioxidentfernung (102) stromab der Wasserstoffentfernung (140) angeordnet ist.

14. Anlage zur Herstellung von Wasserstoff, die dafür eingerichtet ist, einen kohlenwasserstoffhaltigen Einsatzstrom (1, 2) einer Dampfreformierung (120) zu unterwerfen und die Dampfreformierung (120) unter Verwendung einer Reaktionsanordnung (200) durchzuführen, die eine erste Reaktionszone (210) aufweist, welcher unter Verwendung von elektrischem Strom (P) erzeugte Wärme zuführbar ist, **dadurch gekennzeichnet, dass** die Reaktionsanordnung (200) stromab der ersten Reaktionszone (210) eine zweite Reaktionszone (220) aufweist, die dafür eingerichtet ist, ein in der ersten Reaktionszone (210) erhältliches Prozessgas ohne Zuführung von Wärme zu behandeln.

15. Anlage nach Anspruch 14, die zur Durchführung eines Verfahrens nach einem der Ansprüche 1 bis 13 eingerichtet ist.
